# EUROPÄISCHE PATENTSCHRIFT

(11) **EP 3 059 173 B1**
(45) Veröffentlichungstag und Bekanntmachung des Hinweises auf die Patenterteilung: **14.11.2018**
(21) Anmeldenummer: 16000234.1
(22) Anmeldetag: 01.02.2016
(51) Int. Cl.: B65B 11/32, B65B 19/02, B65B 51/14, B65B 53/02, B65B 59/04, B29C 65/20, B29C 65/00, B65G 15/16, B65B 19/22, B29C 65/30, B29C 65/78, B29L 31/00, B29C 65/18, B65B 19/20

(54) **VORRICHTUNG ZUM HERSTELLEN VON PACKUNGEN**
DEVICE FOR PRODUCING PACKAGES
DISPOSITIF DE FABRICATION D'EMBALLAGES

(30) Priorität: 17.02.2015 DE 102015001850
(43) Veröffentlichungstag der Anmeldung: 24.08.2016
(73) Patentinhaber: Focke & Co. (GmbH & Co. KG), 27283 Verden (DE)
(72) Erfinder: Schmidt, Jens, 28879 Grasberg (DE); Budde, Patrick, 28213 Bremen (DE); Woytek, Frank, 30916 Isernhagen (DE)
(74) Vertreter: Aulich, Martin

(56) Entgegenhaltungen:
- EP-A1- 0 647 562
- EP-A2- 1 645 513
- DE-A1-102010 035 320
- DE-A1-102011 122 327

## Beschreibung

Die Erfindung betrifft eine Vorrichtung zum Herstellen und/oder zum Bearbeiten von Packungen gemäß Oberbegriff des Anspruchs 1.

Leistungsfähige Verpackungsmaschinen der Zigarettenindustrie sind auf äußerst kurze Takt- bzw. Arbeitszeiten bei der Herstellung und Behandlung von Packungen ausgerichtet. Dies gilt insbesondere auch für die Anbringung und Fertigstellung einer Außenumhüllung aus siegelbarer Folie bei insbesondere quaderförmigen Hartpackungen, wobei die Umhüllung durch (thermisches) Siegeln der zu verbindenden Faltlappen und/oder durch Schrumpfbehandlung mittels Wärmeübertragung bearbeitet wird. Ein Beispiel für eine derartige leistungsfähige Verpackungsmaschine offenbart DE 10 2011 122 327 A1.

Bearbeitungsorgane, die bei der Fertigung der Packung, insbesondere bei einer Endbehandlung zum Einsatz kommen, sind ortsfest und - soweit funktional zutreffend - zu beiden Seiten der Transport-Bewegungsbahn der Packungen angeordnet. Dies gilt insbesondere für beheizte Organe zum Siegeln von Faltlappen - Siegelbacken - und flächige Wärmeorgane zur Übertragung von Schrumpfwärme auf die Folie - Schrumpforgane. Bei der Vorrichtung gemäß DE 10 2011 122 327 A1 werden Packungen in mehreren parallelen Bahnen im Bereich einer Behandlungsstation für die Außenumhüllung transportiert, und zwar in vertikaler Richtung. Konkret sind vier Paare von aufrechten Packungsförderern für den Vertikaltransport einer entsprechenden Anzahl paralleler Packungsgruppen vorgesehen. Zwischen den nebeneinanderliegenden Packungsbahnen befinden sich die Bearbeitungsorgane für die Außenumhüllung, nämlich Siegelbacken bzw. Heizorgane auf der einen Seite und Andrückorgane auf der gegenüberliegenden Seite der Packung. Mehrere Bearbeitungsorgane bzw. Paare voneinander zugeordneten Organen sind übereinanderliegend im Bereich von Bearbeitungsstationen positioniert.

Es ist Aufgabe der Erfindung, Aufbau und Bedienbarkeit von Verpackungsmaschinen für insbesondere quaderförmige Zigarettenpackungen (Hartpackungen) dahingehend zu verbessern, dass eine erleichterte Wartung sowie Beseitigung von Fehlern einzelner Bearbeitungsorgane ermöglicht ist.

Zur Lösung dieser Aufgabe ist die erfindungsgemäße Vorrichtung mit den Merkmalen des Anspruchs 1 ausgebildet.

Die Bearbeitungsorgane, insbesondere (elektrisch betriebene) Heizelemente einerseits und (pneumatisch beaufschlagte) Druckorgane andererseits sind in einer auf die Stellung der Packungen während des taktweisen Transports derselben ausgerichteten Relativstellung an einem gehäuseartigen Träger angebracht - Kassette -, der Hohlräume aufweist für die Anordnung der Organe und Leitungen bzw. Kanäle für die elektrische, pneumatische, hydraulische Versorgung der Organe. Den Leitungen und Kanälen sind leicht lösbare bzw. herstellbare Verbindungen mit der zentralen Energieversorgung zugeordnet.

Bei einer vorteilhaften Ausführung eines Bearbeitungsaggregats für die Packungen sind vorzugsweise vier aufrechte Förderbahnen für die Packungen nebeneinanderliegend vorgesehen, wobei zwischen benachbarten Packungsförderern je eine Kassette mit nach beiden Seiten wirksamen Bearbeitungsorganen positioniert ist. Randseitig sind jeweils einzelne Kassetten mit vorzugsweise einseitig angeordneten Organen vorgesehen. Die Kassetten sind in der für die Bearbeitung exakten Position so gelagert, dass sie in einfacher Weise - von Hand - aus der Arbeitsposition herausgezogen oder in diese geschoben werden können.

Eine weitere (eigene) Besonderheit besteht darin, dass die Packungsförderer, insbesondere endlose Gurte mit Mitnehmern, aus ihrer Arbeitsstellung einzeln oder gemeinsam herausbewegbar sind, insbesondere durch (aufwärts gerichtete) Schwenkbewegung, sodass über vorzugsweise eine Seite des Aggregats Zugang zu innenliegenden bzw. verdeckten Organen gewährleistet ist.

Weitere innovative Einzelheiten der Vorrichtung und der Arbeitsweise werden nachfolgend anhand der Zeichnungen näher erläutert. Es zeigt:
- Fig. 1: ein Beispiel einer Vorrichtung für die Bearbeitung von (Zigaretten-)Packungen in perspektivischer Darstellung,

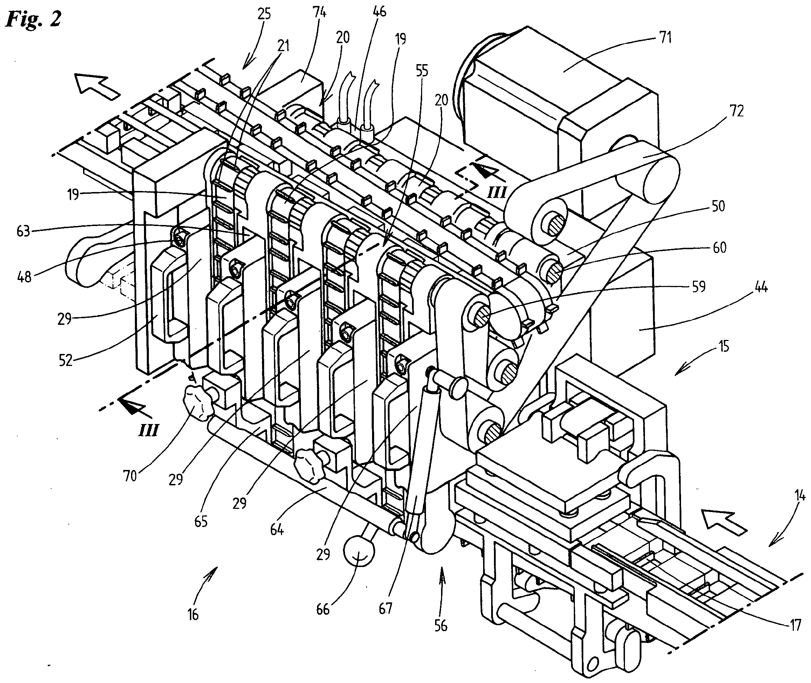

- Fig. 2: einen Ausschnitt II der Fig. 1 in vergrößertem Maßstab,
- Fig. 3: die Einzelheit gemäß Fig. 2 in einer vertikalen Schnittebene III-III, in vergrößertem Maßstab,
- Fig. 4: eine Darstellung der Einzelheit gemäß Fig. 2 bei veränderter Relativstellung von (Förder-)Organen,
- Fig. 5: die Einzelheit gemäß Fig. 4 nach Entnahme eines herausnehmbaren Trägers bzw. einer Kassette,
- Fig. 6: die Einzelheit gemäß Fig. 5 im Querschnitt in der vertikalen Schnittebene VI-VI der Fig. 5, bei vergrößertem Maßstab,
- Fig. 7: eine Kassette im Vertikalschnitt gemäß Schnittebene VII-VII der Fig. 3, bei vergrößertem Maßstab,
- Fig. 8: einen Horizontalschnitt durch die Kassette in der Schnittebene VIII-VIII der Fig. 6, ebenfalls in vergrößertem Maßstab,
- Fig. 9: eine Einzelheit analog Fig. 2 in einer veränderten Ausführung hinsichtlich der Betätigung.

In den Zeichnungen ist ein bevorzugtes Anwendungsgebiet der Innovation gezeigt, nämlich die Bearbeitung von Packungen 10 für Zigaretten, hier in der Ausführung als Klappschachtel mit einer Außenumhüllung 11 aus thermisch siegelbarer und vorzugsweise schrumpfbarer Folie. Es geht um die Anordnung von Bearbeitungsorganen für die Packung 10 während des Fertigstellungsprozesses, vorliegend um thermisches Siegeln von Faltlappen der Außenumhüllung 11 und um die (flächige) Übertragung von Wärme für die Bewirkung eines Schrumpfprozesses der Außenumhüllung.

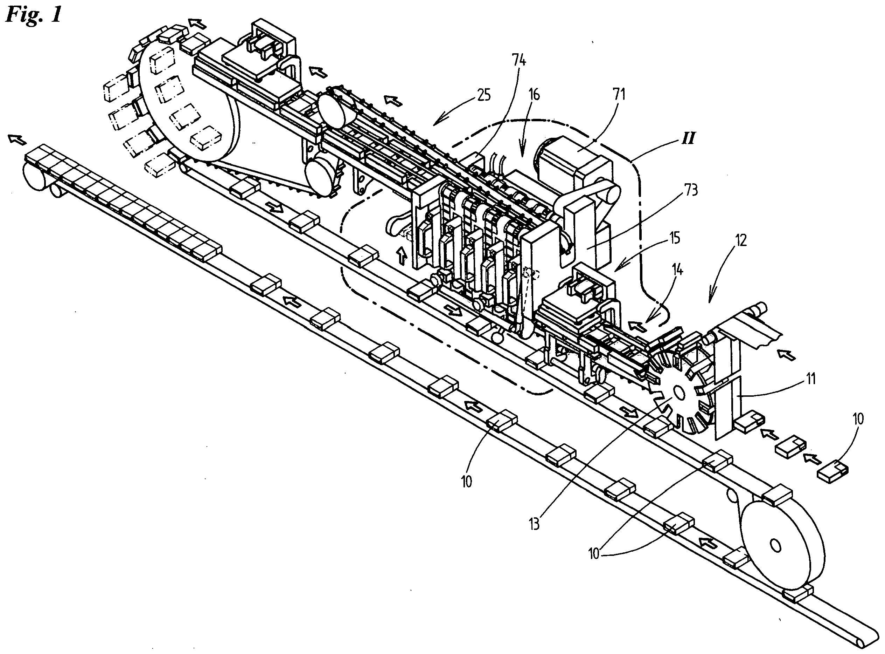

Die in Fig. 1 gezeigte Vorrichtung entspricht im Konzept und weitgehend in der Arbeitsweise der Vorrichtung gemäß DE 10 2011 122 327 A1.

Die von einem Packer fertiggestellten Packungen 10 werden auf einer Packungsbahn einem Umhüllungsaggregat 12 zugeführt zum Einhüllen der Packung 10 in einen Zuschnitt der Außenumhüllung 11. Ein Faltrevolver 13 dient zum Falten der Außenumhüllung 11 und zum Vorsiegeln bzw. Heften von Längsfaltlappen im Bereich einer radial nach außen gerichteten Seitenfläche der Packung 10.

Danach gelangen die Packungen 10 über einen Bahnabschnitt 14 in eine Heft- und Schrumpfstation 15 zur Durchführung von thermischen Siegelungen bzw. Heftungen im Bereich von seitwärts gerichteten Stirnflächen und Bodenflächen der Packungen 10 und zu einer weiteren (Teil-)Schrumpfung der Außenumhüllung.

Gegenstand der vorliegenden Innovationen ist eine (nachfolgende) Vorrichtung bzw. ein Aggregat 16 zur weiteren Übertragung von insbesondere Wärme und Druck auf ausgewählte Packungsflächen während einer Stillstandsphase der taktweise transportierten Packungen 10. Das Aggregat 16 ist so ausgebildet, dass die Packungen 10 entlang mehrerer, paralleler Förderbahnen transportiert und dabei mit entsprechend positionierten Organen beaufschlagt werden. Insbesondere sind die Transportbahnen aufrecht angeordnet, und zwar mehrere Bahnen in Hauptförderrichtung nebeneinander angeordnet. Die Packungen 10 werden - vorliegend im Anschluss an den Faltrevolver 13 - durch einen Packungsförderer transportiert, nämlich durch einen unteren Horizontalgurt 17, der die Packungen 10 in vorgegebenen Abständen durch Mitnehmer 18 erfasst und in den Bereich des Aggregats 16 transportiert. Die Transportbewegung ist so gesteuert, dass eine quer- insbesondere aufwärtsgerichtete anschließende Förderbewegung erst dann eingeleitet wird, wenn eine der Anzahl der Packungsbahnen entsprechende Anzahl von Packungen 10 durch den Horizontalgurt 17 bereitgehalten wird.

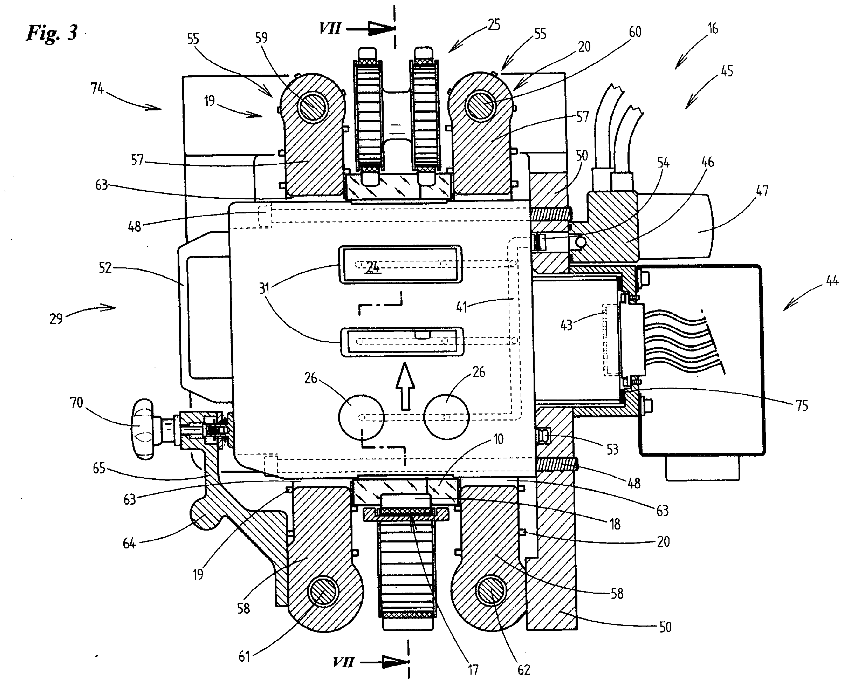

Die Packungen 10 werden im Bereich des Aggregats 16 durch (aufrechte) Packungsförderer transportiert, vorliegend durch einander paarweise gegenüberliegende Vertikalgurte 19, 20. Jeder Vertikalgurt 19, 20 besteht aus einem Endlosgurt und Mitnehmern 21 zum Erfassen jeweils einer Packung 10 in einem einer Stirnwand einerseits und einer Bodenwand andererseits zugekehrten Bereich einer großflächigen (unteren) Packungsseite (Fig. 3). Die Mitnehmer 21 der einander gegenüberliegenden und zugekehrten Vertikalgurte 19, 20 sind ausgerichtet zueinander, also in einer gemeinsamen (horizontalen) Ebene. Dadurch kann bei einem Fördertakt eine Packung 10 erfasst, vom Horizontalgurt 17 abgehoben und taktweise von einer Bearbeitungsstation zur nächsten gefördert werden.

Während des Transports der Packungen 10 entlang den (vertikalen) Packungsbahnen werden bestimmte Flächen der Packungen 10 bzw. der Außenumhüllung 11, vorliegend schmale Längsseiten der quaderförmigen Packungen 10, mit Wärme und/oder Druck beaufschlagt. Zu diesem Zweck sind mehrere, bei dem gezeigten Beispiel drei Bearbeitungsstationen vorgesehen. Vorzugsweise werden in einer ersten, unteren Bearbeitungsstation die Seitenflächen der Packungen 10 - Packungsseiten ohne Faltlappen der Außenumhüllung - mit (Schrumpf-)Wärme beaufschlagt, um eine weitere Teilschrumpfung der Folie zu bewirken. Hierzu dient ein flächiges Schrumpforgan 22 mit einer vorzugsweise die komplette Seitenfläche der Packung 10 abdeckenden Heizfläche.

In der nächstfolgenden (mittleren) Bearbeitungsstation ist ein weiteres Wärmeorgan auf der gegenüberliegenden Seite bzw. auf der zugekehrten Seite einer Packung 10 der benachbarten Transportbahn wirksam zum (Teil-)Siegeln einander überdeckender Schlauch- bzw. Längslappen der Außenumhüllung 11. Hierzu dient eine langgestreckte Siegelbacke 23, vorzugsweise mit etwas geringerer Breite bzw. Höhe als die entsprechende Abmessung der Seitenfläche der Packung 10.

Es folgt eine weitere (dritte bzw. obere) Bearbeitungsstation, in der dieselbe Seitenfläche der Packung 10 (mit einander überdeckenden Längslappen) vollflächig gesiegelt wird, also durch Übertragung von Wärme und Druck im Wesentlichen auf die volle Fläche der Packungsseite. Hierzu dient eine entsprechend bemessene Siegelbacke 24 mit größerer Breite bzw. Höhe.

Die insoweit hinsichtlich der Siegelung und Schrumpfung bearbeiteten Packungen 10 werden in eine (obere) Abförderstellung bewegt und durch einen Obergurt 25 abtransportiert, vorzugsweise in der in DE 10 2011 122 327 A1 beschriebenen Weise.

Im Bereich der parallelen (aufrechten) Förderbahnen für die Packungen 10 sind zwischen benachbarten (Vertikal-)Gurten 19, 20 Bearbeitungsorgane paarweise in unterschiedlicher Ausführung angeordnet. Im Bereich jeweils eines Heizorgans 22, 23, 24 ist gegenüberliegend ein in anderer Weise tätiges Organ vorgesehen, vorliegend jeweils ein Druckorgan 26, 27, 28 - vorzugsweise auf gleicher Höhe. Die Druckorgane wirken als Abstützorgane auf eine Packungsfläche (Längsseite) gegenüberliegend zum Heizorgan 22, 23, 24, und zwar bei einer Packung 10 der benachbarten Bahn. Durch die Druckorgane 26, 27, 28 wird die betroffene Packung 10 an das gegenüberliegende Bearbeitungsorgan - Schrumpforgan 22, Siegelbacke 23, 24 - gedrückt.

Die zwischen benachbarten Vertikalgurten 19, 20 angeordneten Organe sind an einer gemeinsamen, eigenständigen Halterung angebracht, nämlich an einer Kassette 29.

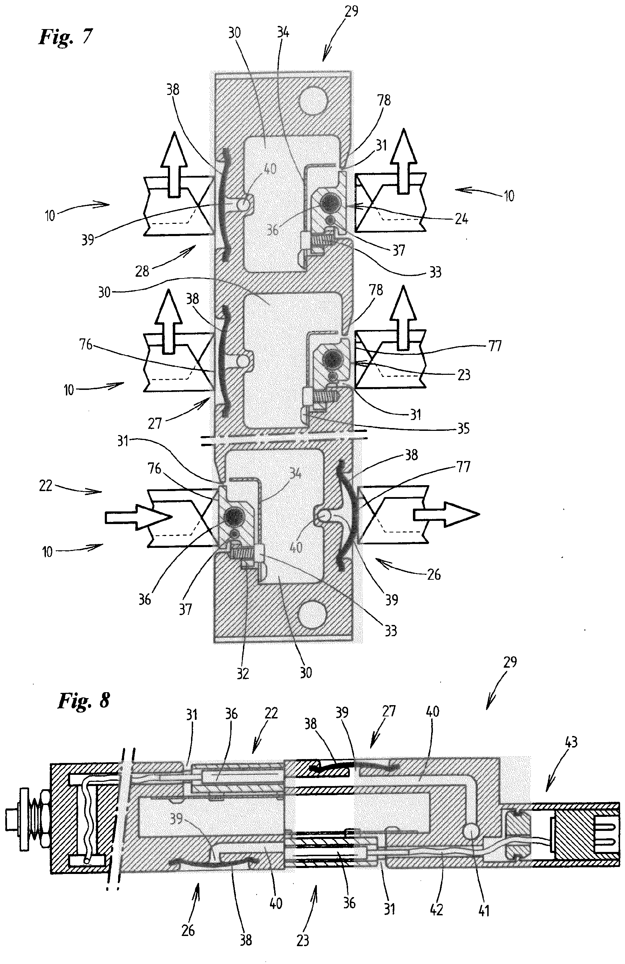

Die Kassette 29 kann konstruktiv in unterschiedlicher Weise ausgebildet sein, jedoch jeweils mit Halterungen für die Bearbeitungsorgane 22, 23, 24; 26, 27, 28. Das Ausführungsbeispiel (Fig. 7, Fig. 8) zeigt eine Kassette aus einem im Wesentlichen quaderförmigen Formstück mit Hohlräumen bzw. Kammern 30 jeweils im Bereich von einander gegenüberliegenden Organen. Die langgestreckten Hohlräume bzw. Kammern 30 bilden im Bereich von (aufrechten) Außenwänden der Kassette 29 langgestreckte, insbesondere rechteckige Ausnehmungen bzw. Fenster 31. Diese sind so bemessen, dass sie den Durchtritt des Bearbeitungsorgans bzw. dessen Wirksamkeit bei der Bearbeitung der Packung 10 ermöglichen. Innerhalb der Fenster 31 sind demnach insbesondere die Schrumpforgane 22 bzw. die Siegelbacken 23, 24 angeordnet. Die Abmessungen sind auf die Längsabmessungen der Packungen 10 abgestimmt.

Die Anbringung dieser Organe an der Kassette 29 ist so ausgebildet, dass jeweils ein Befestigungsschenkel 32 an einem entsprechenden Vorsprung des Fensters 31 befestigt ist, vorliegend durch eine Verbindungsschraube 33. Nach innen, also zur Innenseite der Kammer 30, sind die Heizorgane 22, 23, 24 abgeschirmt, und zwar durch ein (winkelförmiges) Hitzeblech 34, ebenfalls befestigt mittels Schraube 35. Die Beheizung der Organe 22, 23, 24 erfolgt jeweils mittels (elektrischer) Heizpatrone 36, die innerhalb des Körpers der Organe 22, 23, 24 in einer Bohrung angeordnet ist. Weiterhin ist jedes Organ 22, 23, 24 mit einem Temperaturfühler 37 versehen.

Jeweils gegenüberliegend zu den Heiz- bzw. Siegelorganen 22, 23, 24 ist ein Druckorgan an der Kassette 29 angebracht. Die auf eine Packung 10 einer benachbarten Förderbahn wirkenden Druckorgane werden pneumatisch betätigt. Bei dem Beispiel ist ein bewegbares Organ, nämlich eine vorzugsweise elastisch verformbare Membran 38 als Druckorgan vorgesehen. Die vorzugsweise kreisförmige Membran 38 ist mit einem ringsherum laufenden Rand im Bereich einer Vertiefung der Kassette 29 verankert bzw. eingespannt. An einer Innenseite befindet sich im Bereich der Membran 38 mindestens eine Druckluftleitung bzw. innerhalb der Wandung der Kassette 29 ein Druckluftkanal 39, der vorzugsweise mittig auf die Membran 38 gerichtet ist, sodass sich diese bei Druckbeaufschlagung nach außen (gegen die benachbarte Packungswand) verformt. Der Druckluftkanal 39 ist an Druckluftleitungen 40 innerhalb der Kassette 29 angeschlossen. Die Mehrzahl der Druckluftleitungen 40 ist mit einer Sammelleitung 41 verbunden. Diese ist an eine zentrale Druckluftversorgung angeschlossen. Mehrere, vorliegend zwei (kreisförmige) Druckorgane bzw. Membrane 38 bilden zusammen eine Druckeinheit, die an einer Packungsfläche wirksam ist.

Das Beispiel gemäß Fig. 7 ist auf die Bearbeitung von quaderförmigen Packungen 10, insbesondere von Zigarettenpackungen des Typs Klappschachtel/Hinge Lid ausgerichtet. Die quaderförmigen Packungen 10 sind mit der Außenumhüllung 11 versehen und werden im Bereich des Aggregats 19 bzw. im Bereich der mehreren, nebeneinander gebildeten (vertikalen) Packungsbahnen (taktweise) so transportiert, dass langgestreckte, schmale Seitenflächen 76, 77 der Packungen 10 den Bearbeitungs- bzw. Handhabungsorganen zugekehrt und während einer Stillstandsphase auf diese ausgerichtet sind. In der ersten bzw. unteren Station, also im Bereich des Schrumpforgans 22, wird durch ein - an einer benachbarten Kassette 29 angeordnetes - Druckorgan 26 die Seitenfläche 76 gegen die Arbeitsfläche des Schrumpforgans 22 gedrückt. Die betreffende Seitenfläche 76 enthält keine Faltlappen der Außenumhüllung 11. Gegenüberliegend (bezogen auf Fig. 7) befindet sich das Druckorgan 26 in der Druckstellung, in der die entsprechend verformte Membran 38 an der zugekehrten Seitenfläche 77 - gegenüberliegend zur Seitenfläche 76 - anliegt und den Anlagedruck für die gegenüberliegende Seitenfläche 76 erzeugt.

Für den nächsten Fördertakt wird das Druckorgan 26 entlüftet. Bei der Aufwärtsbewegung der Packung 10 wird diese durch Führungsflächen quer verschoben in die Transportstellung, insbesondere mit geringem Abstand von den Seitenflächen der Kassette 29. Bei dem vorliegenden Ausführungsbeispiel ist eine (obere) Begrenzung des Fensters 31 als schräggerichtete Führungsfläche 78 ausgebildet. Diese bewirkt bei der Förderbewegung der Packung 10 eine Querverschiebung derselben. Die Bearbeitungsorgane, insbesondere die Organe 22, 23, 24, sind mit ihren Arbeitsflächen gegenüber der Außenbegrenzung bzw. Außenfläche der Kassette 29 etwas zurückgesetzt, sodass nur durch Querverschiebung - Beaufschlagung durch Druckorgan 26, 27, 28 - die Packung 10 mit der zu bearbeitenden Fläche Anlage an dem Organ 22, 23, 24 erhält.

In den nachfolgenden Stationen werden Faltlappen durch die Siegelorgane 23 und 24 durch thermisches Siegeln miteinander verbunden. Es handelt sich dabei um Seitenlappen bzw. Schlauchlappen der Außenumhüllung 11 im Bereich der Seitenflächen 77. Auch dabei werden die Druckorgane 27, 28 einer benachbarten Kassette 29 in der beschriebenen Weise wirksam.

Die zwischen benachbarten Vertikalgurten 19, 20 angeordneten Kassetten 29 sind beidseitig mit Bearbeitungsorganen versehen. Randseitige Kassetten, die benachbart zu den randseitigen Vertikalgurten 19, 20 positioniert sind, sind lediglich an einer Seite - den Gurten 19, 20 zugekehrt - mit Fenstern 31 bzw. Vertiefungen für Wärmeorgane bzw. Druckorgane versehen, und zwar passend zu den Bearbeitungsorganen der nächstfolgenden Kassette 29.

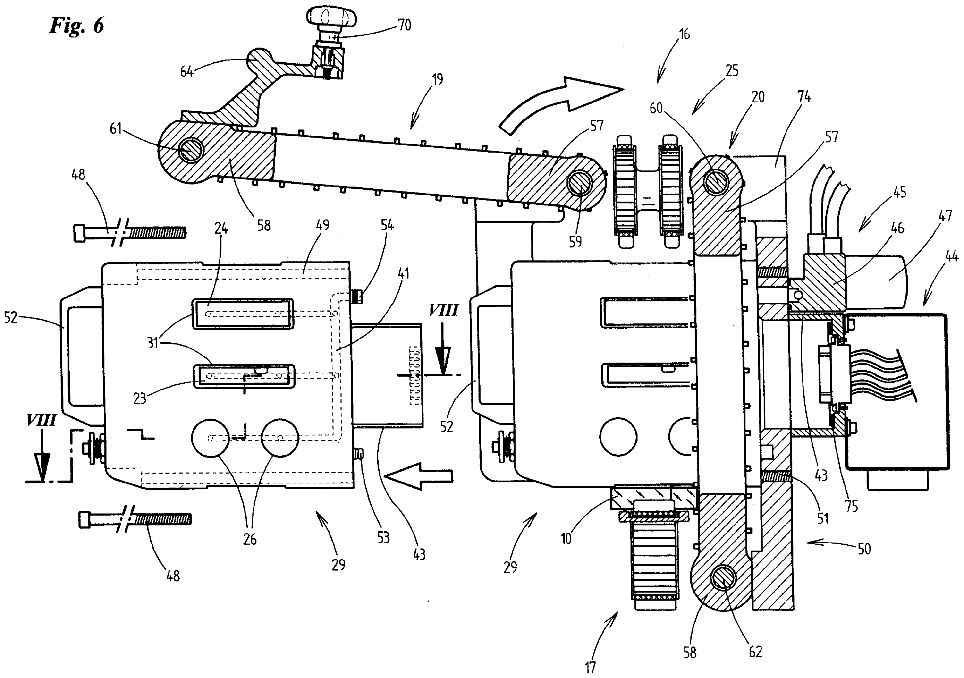

Die Heizpatronen 36 werden mit Strom versorgt über Elektroleitungen 42. Diese verlaufen in Bohrungen bzw. Hohlräumen der Kassette 29 und führen zu einem am Gehäuse der Kassette 29 angebrachten Stecker 43. Dieser ist als Vorsprung ausgebildet, der beim Einsetzen der Kassette 29 in die Arbeitsstellung (z. B. Fig. 6, rechts) Kontakt erhält mit einem feststehenden Gegenkontakt in einem Steckergehäuse 44 (Fig. 6) des Aggregats 16. Dieser Gegenstecker ist an die zentrale Stromversorgung angeschlossen. In der Arbeitsstellung der Kassette 29 ist der Stecker 43 mit dem Anschluss im Steckergehäuse 44 verbunden und wird so mit Strom versorgt.

Analog wird auch eine automatische Druckluftverbindung hergestellt, wenn sich die Kassette 29 in der Arbeitsstellung befindet. Benachbart zum Steckergehäuse 44 ist ein Druckluftanschluss 45 ortsfest angeordnet. Die Sammelleitung 41 wird im Bereich eines Druckluftgehäuses 46 über eine (Druckluft-)Kupplung 54 mit der zentralen Druckluftversorgung verbunden. Die Druckluftzufuhr wird über ein Steuerventil 47 geregelt. Somit wird automatisch die komplette Energieversorgung der Organe einer Kassette 29 hergestellt, wenn diese in Arbeitsstellung positioniert ist.

Die Kassette 29 kann durch Halteorgane in der Arbeitsposition fixiert sein, beispielsweise durch Führungsschienen. Vorliegend ist jede Kassette durch (zwei) Befestigungsschrauben 48, die hier jeweils am oberen und unteren Rand durch einen langgestreckten Kanal 49 hindurchtreten, an einem Traggestell der Vorrichtung fixiert. Es handelt sich dabei um eine (aufrechte) Tragplatte 50 mit Gewindebohrungen 51 für die Verankerung der Befestigungsschrauben 48. Diese können an der freien Seite der Kassette 29 eingesetzt und betätigt werden. Hier befindet sich auch ein Handgriff 52 zum Halten der Kassette 29 während der Montage oder während des Abbauens. Die exakte Position der Kassette 29 in Arbeitsstellung ist zusätzlich durch einen Zentrierstift 53 gesichert. Die Kassette 29 bzw. ein Gehäuseansatz der Kassette 29 mit dem Stecker 43 ist mittels (ringsherumlaufender) Dichtung 75 am feststehenden Gegenstück bzw. Gegenstecker 44 abgedichtet.

Die Tragplatte 50 ist ein Konstruktionsteil, an dem weitere Organe befestigt sind, so der Gegenstecker bzw. das Steckergehäuse 44 und/oder der Druckluftanschluss 45.

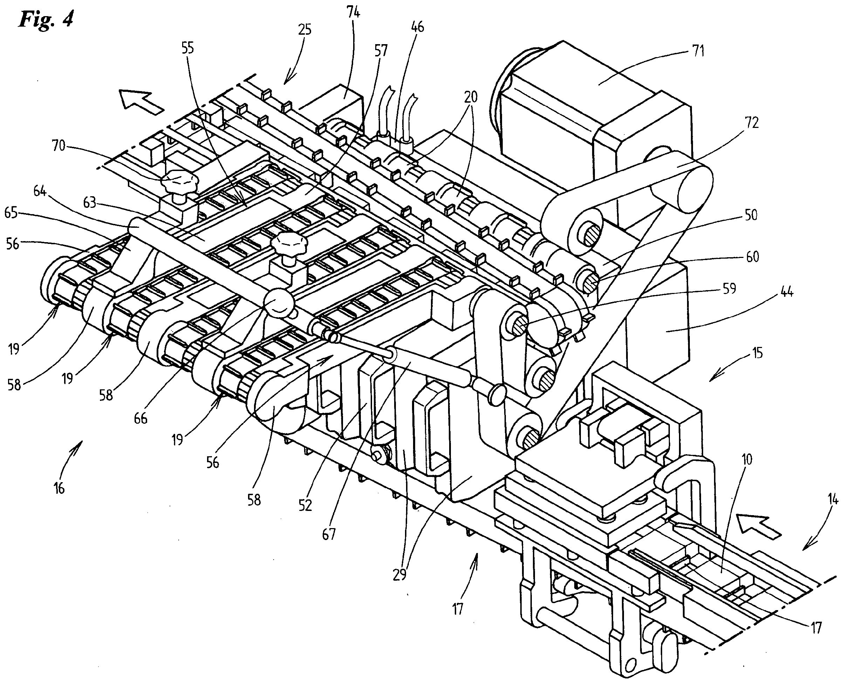

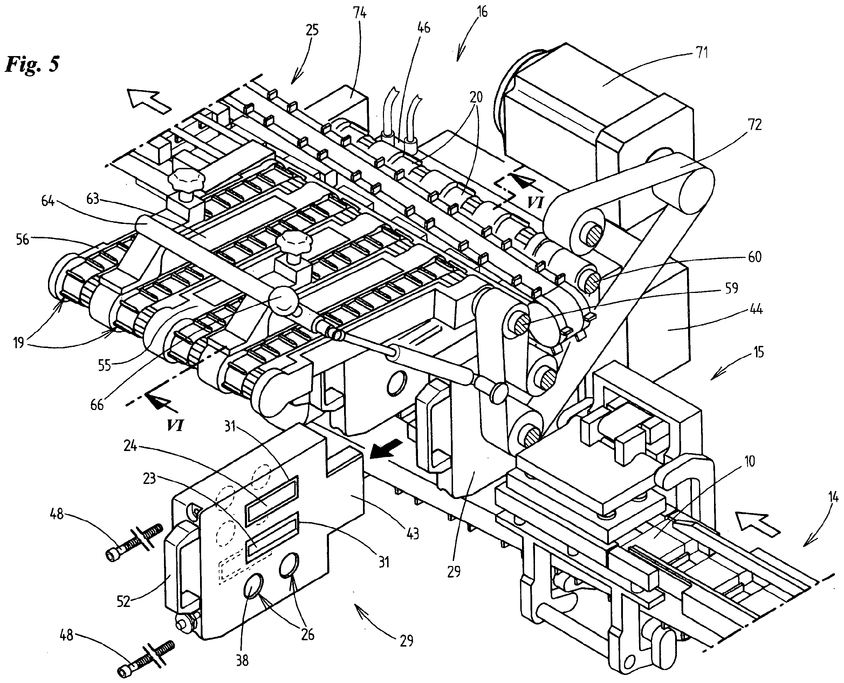

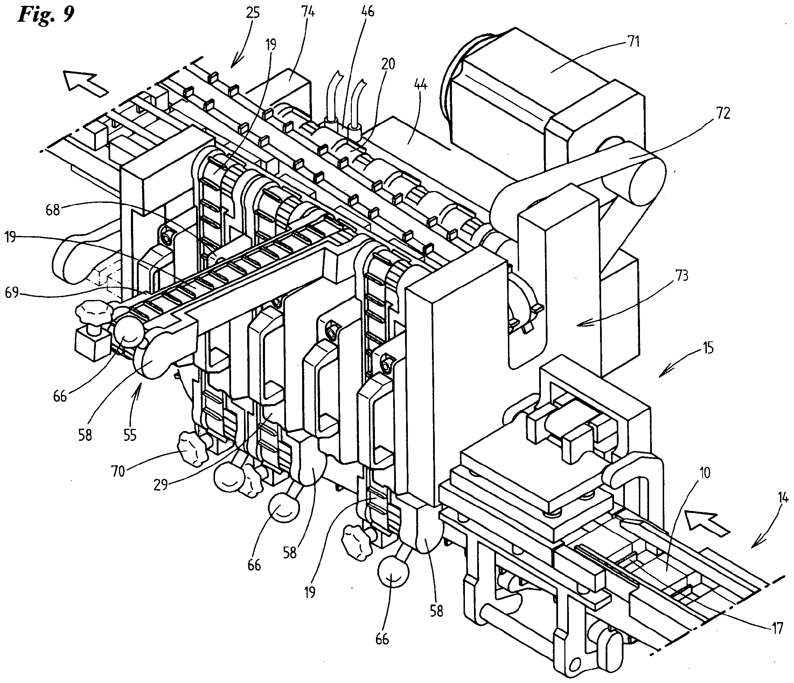

Eine andere Besonderheit ist die Anordnung der Gurte 19, 20 für den (parallelen) Transport der Packungen 10 durch die einzelnen Bearbeitungsstationen. Bei dem vorliegenden Ausführungsbeispiel sind vier Fördereinheiten, also vier Paare von einander gegenüberliegenden bzw. zusammenwirkenden Vertikalgurten 19, 20 vorgesehen. Die Besonderheit besteht darin, dass jeweils mindestens einer der Vertikalgurte, insbesondere der frontseitige Vertikalgurt 19 aus einer Arbeitsstellung (aufrechte Position) in eine Wartungs- oder Reparaturstellung bewegbar ist. Die frontseitigen Vertikalgurte 19 sind schwenkbar aus der aufrechten Stellung in eine im Wesentlichen horizontale Stellung, vorzugsweise um eine obere Schwenkachse (Fig. 6). In dieser Stellung ist der Zugang zu den Gurten 19, 20 und auch zu den innenliegenden Bereichen des Aggregats 16 möglich. Die Anordnung kann so getroffen sein, dass alle (frontseitigen) Vertikalgurte 19 gemeinsam durch eine entsprechende Betätigungsmechanik in die Wartungsstellung bewegt werden können (Fig. 4, Fig. 5). Alternativ kann die Betätigungsmechanik so ausgebildet sein, dass individuell einzelne (frontseitige) Vertikalgurte 19 bewegbar bzw. schwenkbar sind (Fig. 9).

Die Gurte 19, 20 sind je für sich an einem Gurtträger gelagert, der die Verstellbarkeit bzw. Schwenkbarkeit ermöglicht. Vorliegend sind den (bzw. jedem) Gurten 19, 20 Gurtarme 55, 56 zugeordnet. In dem zwischen benachbarten Vertikalgurten 19 einerseits und 20 andererseits gebildeten Zwischenräumen ist jeweils ein Gurtarm 55 gelagert. An den Enden bzw. an der freien Seite der randseitigen Gurte 19, 20 sind konstruktiv abweichend ausgebildete Gurtarme 56 eingebaut. Die Gurtarme 55 füllen im Wesentlichen den Bereich zwischen benachbarten Gurten 19, 20 derselben Seite aus. Ausnehmungen 62 an jedem Gurtarm 55, 56 ermöglichen den Durchtritt bzw. die Positionierung der Kassetten 29 zwischen den Gurten 19, 20. Die randseitigen Gurtarme 59 sind mit einer einseitig offenen Ausnehmung 63 versehen durch Abkröpfung eines mittleren Teils des Gurtarms 56.

Die (schwenkbaren) Gurtarme 55, 56 sind an den Enden - oben und unten - mit angeformten Lagerstücken 57, 58 versehen und mit diesen auf Wellen bzw. Achsen gelagert. Vorliegend sind im Bereich der oberen Lagerstücke 57 durchgehende (AntriebsWellen 59, 60 in entsprechenden Bohrungen der Lagerstücke 57 drehbar angeordnet. Den unteren Lagerstücken 58 sind entsprechend angeordnete Achsen 61, 62 zugeordnet.

Die Gurtarme 55, 56 bilden mit den zugeordneten Gurten 19, 20 jeweils konstruktive Einheiten. Die (frontseitigen) Gurte 19 können gemeinsam (Fig. 4, Fig. 5) oder einzeln (Fig. 9) mit Hilfe der Gurtarme 55, 56 in die Wartungsstellung geschwenkt werden. Die Schwenkbewegung erfolgt um die obere Welle 59, die bei allen Ausführungsformen durchgehend verläuft.

Bei dem Ausführungsbeispiel mit gemeinsamer Verstellung der nebeneinanderliegenden Gurten 19 ist ein Verbindungsorgan - Verbindungsstange 64 - über Verbindungsstücke 65 mit mindestens einem der (unteren) Lagerstücke 58 verbunden. Die nebeneinanderliegenden Gurte 19 bzw. die Gurtarme 55, 56 sind durch die untere Achse 61 miteinander verbunden, sodass bei einer Verstellung der Verbindungsstange 64 alle nebeneinanderliegenden Gurte 19 mit den Gurtarmen 55, 56 in die Wartungsstellung bewegt werden. An der Verbindungsstange 64 ist zu diesem Zweck ein Handgriff bzw. Kugelgriff 66 angebracht. Weiterhin ist die Verbindungsstange 64 mit einer Gasdruckfeder 67 verbunden, die den Bewegungsvorgang erleichtert bzw. harmonisiert.

Bei einer Bewegbarkeit einzelner Gurte 19 (Fig. 9) ist eine konstruktive Umgestaltung geboten. Jedem Gurt 19 ist ein Gurtarm 56 zugeordnet, der sich an der einen Seite des betreffenden Gurts 19 befindet und mit dem oberen Lagerstück 57 auf der Welle 59 schwenk- bzw. drehbar gelagert ist. Auf der gegenüberliegenden Seite desselben Gurts 19 ist ein weiterer Gurtarm diesem Gurt 19 zugeordnet, nämlich ein Hilfsarm 68. Auch dieser ist an den beiden Enden mit einer Verdickung versehen zur Bildung von Lagerstücken 69. Das obere Lagerstück 69 ist drehbar auf der Welle 59 gelagert. Das untere Lagerstück 69 ist über einen drehbaren Zapfen - anstelle der durchgehenden Achse 61 gemäß Fig. 3 - mit dem Lagerstück 58 am unteren Ende des Gurtarms 56 verbunden, sodass jeweils ein Gurt 19 mit dem Gurtarm 56 und dem Hilfsarm 68 eine bewegbare bzw. schwenkbare Einheit bildet.

Bei dieser Ausführung kann jeder Gurt 19 einzeln in die (horizontale) Wartungsstellung und zurück in die Arbeitsstellung bewegt werden. Zur Betätigung ist ein Handgriff vorgesehen, vorliegend ein Kugelgriff 66, der an dem unteren Lagerstück 58 angebracht ist. Weiterhin ist ein Arretierungsrad 70 an der bewegbaren Einheit angebracht, z. B. am Hilfsarm 68. Mit dem Arretierungsrad 70 wird über eine entsprechende Verbindung die Arbeitsstellung des Gurts 19 gegen unbeabsichtigte Schwenkbewegungen gesichert.

Der Antrieb der Vertikalgurte 19, 20 erfolgt im Bereich der oberen Umlenkung, nämlich im Bereich der Wellen 59, 60. Ein Antriebsmotor 71 ist mit den beiden Wellen 59, 60 verbunden, bei dem vorliegenden Ausführungsbeispiel über einen (endlosen) Antriebsriemen 72 (Zahnriemen) über Umlenkwalzen die Wellen 59, 60 synchron und taktweise antreibt. Auf den (Antriebs-)Wellen 59, 60 sind Umlenkwalzen für die Vertikalgurte 19, 20 gelagert, die den gemeinsamen (Synchron-)Antrieb der Vertikalgurte 19, 20 - taktweise - übertragen. Die (unteren) Achsen 61, 62 sind frei drehbar.

Die Organe des Aggregats 16 sind durch ein besonderes Tragwerk gehalten, welches aus der (rückseitigen) Trageinheit - Tragplatte 50 - und (zwei) Quertragwerken besteht, vorliegend quergerichtete Halteplatten 73, 74. Die quergerichteten Tragteile - Halteplatten 73, 74 - dienen zur Lagerung der Wellen 59, 60 und der Achsen von Umlenkwalzen des Riemens 72. Weiterhin kann die vorzugsweise durchgehende Achse 62 der rückseitigen, nicht bewegbaren Vertikalgurte 20 mit ihren Enden drehbar in den Halteplatten 73, 74 gelagert sein.

Die Kassetten 29 als auswechselbare Träger für Bearbeitungsorgane können auch für mechanische (Falt-)Organe eingesetzt werden oder für solche, die hydraulisch betätigt, nämlich bewegt werden. Weiterhin kann die Vorrichtung so ausgebildet werden, dass - unabhängig von den Kassetten 29 - die Gurte 19, 20 zum Transport der Packungen 10 in parallelen Bahnen frontseitig und/oder rückseitig bewegbar, insbesondere schwenkbar sind.

**Bezugszeichenliste:**

| | | | |
|---|---|---|---|
| 10 | Packung | 45 | Druckluftanschluss |
| 11 | Außenumhüllung | 46 | Druckluftgehäuse |
| 12 | Umhüllungsaggregat | 47 | Steuerventil |
| 13 | Faltrevolver | 48 | Befestigungsschraube |
| 14 | Bahnabschnitt | 49 | Kanal |
| 15 | Heft- und Schrumpfstation | 50 | Tragplatte |
| 16 | Aggregat | 51 | Gewindebohrung |
| 17 | Horizontalgurt | 52 | Handgriff |
| 18 | Mitnehmer | 53 | Zentrierstift |
| 19 | Vertikalgurt | 54 | Kupplung |
| 20 | Vertikalgurt | 55 | Gurtarm |
| 21 | Mitnehmer | 56 | Gurtarm |
| 22 | Schrumpforgan | 57 | Lagerstück |
| 23 | Siegelbacke | 58 | Lagerstück |
| 24 | Siegelbacke | 59 | Welle |
| 25 | Obergurt | 60 | Welle |
| 26 | Druckorgan | 61 | Achse |
| 27 | Druckorgan | 62 | Achse |
| 28 | Druckorgan | 63 | Ausnehmung |
| 29 | Kassette | 64 | Verbindungsstange |
| 30 | Kammer | 65 | Verbindungsstück |
| 31 | Fenster | 66 | Kugelgriff |
| 32 | Befestigungsschenkel | 67 | Gasdruckfeder |
| 33 | Verbindungsschraube | 68 | Hilfsarm |
| 34 | Hitzeblech | 69 | Lagerstück |
| 35 | Schraube | 70 | Arretierungsrad |
| 36 | Heizpatrone | 71 | Antriebsmotor |
| 37 | Temperaturfühler | 72 | Antriebsriemen |
| 38 | Membran | 73 | Halteplatte |
| 39 | Druckluftkanal | 74 | Halteplatte |
| 40 | Druckluftleitung | 75 | Dichtung |
| 41 | Sammelleitung | 76 | Seitenfläche |
| 42 | Elektroleitung | 77 | Seitenfläche |
| 43 | Stecker | 78 | Führungsfläche |
| 44 | Steckergehäuse | | |

## Patentansprüche

1. Vorrichtung zum Bearbeiten von Zigaretten-Packungen (10) mit einer Außenumhüllung (11) aus siegelbarer und schrumpfbarer Folie, wobei die mit der Außenumhüllung (11) versehenen Packungen (10) nacheinander eine Mehrzahl von entlang einer Transportbahn der Packungen (10) angeordneten Bearbeitungsstationen mit Bearbeitungsorganen zur Übertragung von Wärme und Druck auf die Packungen (10) durchlaufen, **gekennzeichnet durch** folgende Merkmale:
a) mehrere zu einer Einheit gehörende unterschiedliche Bearbeitungsorgane (22, 23, 24; 26, 27, 28), nämlich Siegelorgane (23, 24) zum Siegeln von Faltlappen der Packungen (10) und/oder Schrumpforgane (22) zur Übertragung von Schrumpfwärme auf die Packungen (10) und Druckorgane (26, 27, 28) zur Druckbeaufschlagung der Packungen (10), sind an einem gemeinsamen Träger, nämlich an einer Kassette (29), in einer Arbeitsposition neben der Transportbahn für die Packungen (10) angeordnet,
b) die Kassette (29) ist als Einheit mit den Bearbeitungsorganen (22, 23, 24; 26, 27, 28) aus der Arbeitsposition herausnehmbar,
c) Leitungen, Kanäle oder sonstige Verbindungen zur mechanischen elektrischen oder pneumatischen oder hydraulischen Versorgung der Bearbeitungsorgane (22, 23, 24; 26, 27, 28) sind zum Herausnehmen der Kassette (29) von der Versorgung trennbar.

2. Vorrichtung nach Anspruch 1, **gekennzeichnet durch** folgende Merkmale:
a) eine Mehrzahl von Packungen (10) ist zur Bearbeitung, nämlich zum thermischen Siegeln und/oder zur Schrumpfbehandlung der Außenumhüllung (11) entlang mehrerer, vorzugsweise aufrechter Transportbahnen durch Vertikalgurte (19, 20), transportierbar,
b) mehrere paarweise einander gegenüberliegende Vertikalgurte (19, 20) sind mit Abstand voneinander, nämlich mit Abstand zwischen benachbarten Paaren von Vertikalgurten (19, 20), angeordnet,
c) zwischen benachbarten Vertikalgurten (19, 20) ist jeweils mindestens eine Kassette (29) mit den erforderlichen Bearbeitungsorganen angeordnet, derart, dass sich die Bearbeitungsorgane einer Kassette (29) im Bereich einer Packung (10) bzw. einer Packungsfläche befinden, mindestens während einer Stillstandsphase der Packung (10).

3. Vorrichtung nach Anspruch 2, **dadurch gekennzeichnet, dass** die zwischen benachbarten Paaren von Vertikalgurten (19, 20) angeordneten Kassetten (29) an zwei einander gegenüberliegenden und jeweils benachbarten Reihen von Packungen (10) zugeordneten Seiten, und zwar in aufrechten Wandungen der Kassette (29), Bearbeitungsorgane (22, 23, 24; 26, 27, 28) aufweisen, vorzugsweise derart, dass auf der einen Seite der Kassette (29) ein Organ zur Übertragung von Wärme und/oder Druck und gegenüberliegend ein betätigbares Druckorgan (26, 27, 28) angeordnet ist, derart, dass die Druckorgane (26, 27, 28) jeweils eine Packung (10) gegen ein Bearbeitungsorgan (22, 23, 24; 26, 27, 28) einer benachbarten Kassette (29) drücken.

4. Vorrichtung nach Anspruch 1 oder einem der weiteren vorstehenden Ansprüche, **dadurch gekennzeichnet, dass** die etwa quaderförmig ausgebildete Kassette (29) im Bereich einer aufrechten Seitenwand in einer ersten Station auf der einen Seite ein Wärmeorgan, zum Beispiel ein Schrumpforgan (22), und gegenüberliegend ein Druckorgan (26) sowie darüberliegend auf der anderen Seite der Kassette (29) ein Druckorgan (27) und gegenüberliegend zu diesem ein Wärmeorgan, zum Beispiel eine Siegelbacke (23), und schließlich in einer dritten, oberen Station auf derselben Seite der Kassette (29) ein weiteres Wärmeorgan, zum Beispiel eine Siegelbacke (24), und gegenüberliegend ein weiteres Druckorgan (28) aufweist.

5. Vorrichtung nach Anspruch 1 oder einem der weiteren vorstehenden Ansprüche, **dadurch gekennzeichnet, dass** die Kassette (29) mindestens teilweise als Hohlkörper ausgebildet ist, insbesondere mit entsprechend der Anzahl der - paarweise - übereinander angeordneten Bearbeitungsorgane gebildeten Kammern, die Ausnehmungen in der Ausführung von Fenstern (31) oder Vertiefungen für die Aufnahme der Organe aufweisen, wobei Kanäle (39, 40, 41) für die Zu- und Abführung von Druckmedien oder zur Aufnahme von Elektroleitungen (42) in Wandungen der Kassette (29) verlaufen.

6. Vorrichtung nach Anspruch 1 oder einem der weiteren vorstehenden Ansprüche, **dadurch gekennzeichnet, dass** Druckorgane (26, 27, 28) für die Beaufschlagung der bearbeiteten Packungen (10) eine vorzugsweise kreisförmige Membran (38) aufweisen, die mittels Druckluft bis zur Anlage an einer Packungsfläche beaufschlagbar ist, wobei die Membran (38) vorzugsweise in einer kreisförmigen Vertiefung der Kassette (29) verankert ist.

7. Vorrichtung nach Anspruch 1 oder einem der weiteren vorstehenden Ansprüche, **dadurch gekennzeichnet, dass** langgestreckten Wärmeorganen, nämlich Schrumpforganen (22) und/oder Siegelbacken (23, 24), gegenüber dem Inneren der Kassette (29) gegen Wärmeabstrahlung geschützt sind, insbesondere durch Hitzebleche (34).

8. Vorrichtung nach Anspruch 1 oder einem der weiteren vorstehenden Ansprüche, **dadurch gekennzeichnet, dass** die Wärmeorgane, nämlich Schrumpforgane (22), Siegelbacken (23, 24), elektrisch beheizbar sind, insbesondere über Heizpatronen (36), wobei elektrische Leitungen (42) zu einem am Gehäuse der Kassette (29) angebrachten oder angeformten, vorzugsweise gemeinsamen Stecker (43) führen, der in Arbeitsstellung der Kassette (29) die elektrische Verbindung mit der zentralen Energieversorgung herstellt, vorzugsweise über an einem Traggestell der Vorrichtung angebrachte Gegenstecker mit Steckergehäuse (44).

9. Vorrichtung nach Anspruch 1 oder einem der weiteren vorstehenden Ansprüche, **dadurch gekennzeichnet, dass** die Kassette (29) ein System von Druckluftleitungen (39, 40, 41) aufweist, durch die die Druckorgane (26, 27, 28) vorzugsweise gleichzeitig mit Druckluft beaufschlagbar sind, wobei eine Sammelleitung (41) im Bereich einer pneumatischen Kupplung (54) mündet, die eine Verbindung der Sammelleitung (41) der Kassette (29) mit einer vorzugsweise zentralen und gemeinsamen Druckluftversorgung herstellt.

10. Vorrichtung nach Anspruch 1 oder einem der weiteren vorstehenden Ansprüche, **dadurch gekennzeichnet, dass** die Kassetten (29) in der Arbeitsstellung lösbar fixiert sind, vorzugsweise durch langgestreckte Befestigungsschrauben (48), die an einer freien Entnahmeseite betätigbar und mit einem Teil einer Tragplatte (50) verbunden sind und dass vorzugsweise mindestens die Heizorgane,nämlich Schrumpforgane (22), Siegelbacken (23, 24), lösbar an der Kassette (29) befestigt sind, vorzugsweise durch Verbindungsschrauben (33).

11. Vorrichtung nach Anspruch 2 oder einem der weiteren vorstehenden Ansprüche, **dadurch gekennzeichnet, dass** mindestens einzelne Vertikalgurte (19) bzw. eine Gruppe von Vertikalgurten (19) aus der (aufrechten) Arbeits- bzw. Transportstellung in eine Wartungs- bzw. Reparaturstellung bewegbar ist bzw. sind, insbesondere in eine horizontal gerichtete Stellung, wobei vorzugsweise mindestens die bewegbaren bzw. schwenkbaren Vertikalgurte (19) über Umlenkwalzen laufen bzw. geführt sind, die vorzugsweise auf einer Antriebs-Welle gelagert und um die Welle bzw. mit dieser durch Schwenkbewegung in die Reparatur- bzw. Wartungsstellung bewegbar sind.

12. Vorrichtung nach Anspruch 11, **dadurch gekennzeichnet, dass** mehrere, vorzugsweise die Gesamtheit der frontseitigen Vertikalgurte (19), in die Reparatur- bzw. Wartungsstellung bewegbar ist, wobei die bewegbaren Vertikalgurte (19) durch ein Betätigungsgestell miteinander verbunden sind, insbesondere mit einer quergerichteten Verbindungsstange (64).

13. Vorrichtung nach Anspruch 11 oder einem der weiteren vorstehenden Ansprüche, **dadurch gekennzeichnet, dass** vorzugsweise jedem Vertikalgurt (19, 20), jedoch mindestens den schwenkbaren Vertikalgurten (19), Tragorgane zugeordnet sind, insbesondere Gurtarme (55, 56), die mit einem oberen Ende schwenk- bzw. drehbar auf der Antriebs-Welle (59, 60) gelagert und mit dem anderen unteren Ende über eine (durchgehende) Achse (61, 62) zur Aufnahme von unteren Umlenkwalzen der Vertikalgurte (19, 20) dient.

14. Vorrichtung nach Anspruch 11 oder einem der weiteren vorstehenden Ansprüche, **dadurch gekennzeichnet, dass** einzelne Vertikalgurte (19) bewegbar, nämlich in eine horizontale Reparatur- bzw. Wartungsstellung, wobei vorzugsweise jedem schwenkbaren Vertikalgurt (19) an beiden Seiten Gurtarme (55) oder Hilfsarme (68) zugeordnet die freien, bewegbaren unteren Enden der Vertikalgurte (19) mit Umlenkrollen auf einem Achsstück gelagert sind, welches Enden, nämlich Lagerstücke (58) der Gurtarme (55, 68) miteinander verbindet.

15. Vorrichtung nach Anspruch 2 oder einem der weiteren vorstehenden Ansprüche, **gekennzeichnet durch** ein Tragwerk mit rückseitiger Tragplatte (50) und quergerichteten Tragteilen, nachfolgend: Halteplatten (73, 74), wobei insbesondere die oberen Wellen (59, 60) für den Antrieb der Vertikalgurte (19, 20) in den Halteplatten (73, 74) drehbar gelagert sind.

16. Vorrichtung nach Anspruch 1 oder einem der weiteren vorstehenden Ansprüche, **dadurch gekennzeichnet, dass** Arbeits- bzw. Wirkflächen von Bearbeitungsorganen der Kassetten (29), insbesondere Druck- bzw. Heizflächen der Schrumpforgane (22) und/oder der Siegelbacken (23, 24), gegenüber einer Außenkontur bzw. Außenfläche der Kassette (29) zurückgesetzt sind, wobei Führungsmittel, insbesondere schräggerichtete Führungsflächen (78) im Bereich eines Fensters (31) für die Anordnung des Organs, eine Querverschiebung der Packungen (10) nach Durchführung einer Bearbeitung aufgrund der Transportbewegung bewirken.

## Claims

1. Device for the processing of cigarette packs (10) with an outer sheath (11) of sealable and shrinkable film, wherein the packs (10) provided with the outer sheath (11) travel one after another through a plurality of processing stations arranged along a transport track of the packs (10) with processing elements for the transfer of heat and pressure to the packs (10), **characterized by** the following features:
a) several, different processing elements (22, 23, 24; 26, 27, 28) belonging to a unit, namely sealing elements (23, 24) for the sealing of folded flaps of the packs (10) and/or shrinkage elements (22) for the transfer of shrinkage heat to packs (10) and pressing elements (26, 27, 28) for applying pressure on the packs (10) are arranged on a common carrier, namely on a cassette (29), in a working position adjacent to the transport track for the packs (10),
b) the cassette (29) can be taken out of the working position as a unit with the processing elements (22, 23, 24; 26, 27, 28),
c) lines, channels or other types of connections for the mechanical electrical or pneumatic or hydraulic power supply to the processing elements (22, 23, 24; 26, 27, 28) can be separated from the power supply for removal of the cassette (29).

2. Device according to Claim 1, **characterized by** the following features:
a) a plurality of packs (10) can be transported along several preferably upright transport tracks by vertical belts (19, 20) for the processing, namely for heat sealing and/or for shrinkage processing of the outer sheath (11),
b) several pairwise opposing vertical belts (19, 20) are arranged with a spacing from each other, namely with spacing between neighbouring pairs of vertical belts (19, 20),
c) between neighbouring vertical belts (19, 20) is arranged in each case at least one cassette (29) with the required processing elements, so that the processing elements of one cassette (29) are situated in the region of one pack (10) or one pack surface at least during a standstill phase of the pack (10).

3. Device according to claim 2, **characterized in that** the cassettes (29) arranged between neighbouring pairs of vertical belts (19, 20) have processing elements (22, 23, 24; 26, 27, 28) on two opposite sides each facing neighbouring rows of packs (10), specifically in upright walls of the cassette (29), preferably such that on one side of the cassette (29) is arranged an element for transfer of heat and/or pressure and opposite this an operable pressing element (26, 27, 28) such that the pressing elements (26, 27, 28) each time press a pack (10) against a processing element (22, 23, 24; 26, 27, 28) of a neighbouring cassette (29).

4. Device according to Claim 1 or one of the further preceding claims, **characterized in that** the roughly cuboid cassette (29) has in the region of an upright side wall in a first station a heat element, for example a shrinkage element (22), on the one side and opposite this a pressing element (26) and above this on the other side of the cassette (29) a pressing element (27) and opposite the latter a heating element, for example a sealing jaw (23), and finally in a third, upper station on the same side of the cassette (29) another heating element, for example a sealing jaw (24), and opposite this another pressing element (28).

5. Device according to Claim 1 or one of the further preceding claims, **characterized in that** the cassette (29) is at least partially fashioned as a hollow body, especially having chambers formed according to the number of processing elements arranged one above the other - in pairs -, which chambers have recesses, configured as windows (31), or depressions for holding the elements, while channels (39, 40, 41) for the supply and drainage of pressure media or for accommodation of electrical lines (42) run in walls of the cassette (29).

6. Device according to Claim 1 or one of the further preceding claims, **characterized in that** pressing elements (26, 27, 28) for acting upon the processed packs (10) have a preferably circular membrane (38), which can be acted upon by pressurized air until it bears against a pack surface, wherein the membrane (38) is preferably anchored in a circular recess of the cassette (29).

7. Device according to Claim 1 or one of the further preceding claims, **characterized in that** elongated heating elements, namely shrinkage elements (22) and/or sealing jaws (23, 24), are protected against thermal radiation toward the inside of the cassette (29), in particular by heating plates (34).

8. Device according to Claim 1 or one of the further preceding claims, **characterized in that** the heating elements, namely shrinkage elements (22), sealing jaws (23, 24), are electrically heatable, in particular by heating cartridges (36), wherein electrical lines (42) lead to a connector (43) attached or moulded onto the housing of the cassette (29), preferably a common connector, which makes the electrical connection with the central power supply in the working position of the cassette (29), preferably via a mating connector with connector housing (44) arranged on a support frame of the device.

9. Device according to Claim 1 or one of the further preceding claims, **characterized in that** the cassette (29) has a system of pressurized air lines (39, 40, 41) by which the pressing elements (26, 27, 28) can be acted upon with pressurized air, preferably at the same time, wherein a manifold (41) empties in the region of a pneumatic coupling (54), which makes a connection of the manifold (41) of the cassette (29) with a preferably central and common pressurized air supply.

10. Device according to Claim 1 or one of the further preceding claims, **characterized in that** the cassettes (29) are removably fixed in the working position, preferably by elongated fastening screws (48), which can be operated at a free removal side and are connected to part of a support plate (50) and **in that** preferably at least the heating elements, namely shrinkage elements (22), sealing jaws (23, 24) are removably fastened to the cassette (29), preferably by connection screws (33).

11. Device according to Claim 2 or one of the further preceding claims, **characterized in that** at least individual vertical belts (19) or a group of vertical belts (19) can be moved out from the (upright) working or transport position into a maintenance or repair position, especially a horizontally oriented position, wherein preferably at least the movable or swivelling vertical belts (19) run or are led across deflection rollers, which are preferably mounted on a drive shaft and can be moved about the shaft or with it by a swivel movement into the repair or maintenance position.

12. Device according to Claim 11, **characterized in that** several, preferably all of the front side vertical belts (19), can be moved into the repair or maintenance position, while the movable vertical belts (19) are joined together by an activating part, especially by a transversely oriented connection rod (64).

13. Device according to Claim 11 or one of the further preceding claims, **characterized in that** preferably each vertical belt (19, 20), but at least the swivelling vertical belts (19), are associated with support elements, especially belt arms (55, 56), which are mounted by one upper end in a swivelling or pivoting manner on the drive shaft (59, 60) and with the other lower end serve to accommodate lower deflection rollers of the vertical belts (19, 20) by means of a (continuous) axle (61, 62).

14. Device according to Claim 11 or one of the further preceding claims, **characterized in that** individual vertical belts (19) are movable, namely, able to move into a horizontal repair or maintenance position, wherein preferably each swivelling vertical belt (19) is assigned belt arms (55) or auxiliary arms (68) on both sides and free, movable lower ends of the vertical belts (19) are mounted with deflection rollers on an axle piece, which connects the ends, namely bearing pieces (58), of the belt arms (55, 68) to one another.

15. Device according to Claim 2 or one of the further preceding claims, **characterized by** a support system with rear support plate (50) and transversely directed support parts, in the following: holding plates (73, 74), wherein especially the upper shafts (59, 60) for the driving of the vertical belts (19, 20) are mounted and able to rotate in the holding plates (73, 74).

16. Device according to Claim 1 or one of the other further preceding claims, **characterized in that** working or active surfaces of processing elements of the cassettes (29), especially pressing and heating surfaces of the shrinkage elements (22) and/or the sealing jaws (23, 24), are set back from an outer contour or outer surface of the cassette (29), while guide means, especially slanting guide surfaces (78) in the region of a window (31) for the arranging of the element, produce a transverse displacement of the packs (10) after performing a processing based on the transport movement.

## Revendications

1. Dispositif pour traiter des emballages de cigarettes (10) comprenant une enveloppe extérieure (11) en film scellable et rétractable, les emballages (10) munis de l'enveloppe extérieure (11) passant les uns après les autres à travers une pluralité de postes de traitement disposés le long d'une bande de transport des emballages (10) comprenant des organes de traitement pour le transfert de chaleur et de pression aux emballages (10), **caractérisé par** les caractéristiques suivantes :
a) plusieurs organes de traitement différents (22, 23, 24 ; 26, 27, 28) appartenant à une unité, à savoir des organes de scellement (23, 24) pour sceller des volets pliants des emballages (10) et/ou des organes de rétraction (22) pour transférer de la chaleur de rétraction aux emballages (10) et des organes de pression (26, 27, 28) pour solliciter par pression les emballages (10), sont disposés sur un support commun, à savoir une cassette (29) dans une position de travail à côté de la bande de transport pour les emballages (10),
b) la cassette (29) peut être retirée en tant qu'unité avec les organes de traitement (22, 23, 24 ; 26, 27, 28) hors de la position de travail,
c) des conduites, des canaux ou d'autres liaisons à une alimentation électrique ou pneumatique ou hydraulique des organes de traitement (22, 23, 24 ; 26, 27, 28) peuvent être séparés de l'alimentation en vue du retrait de la cassette (29) .

2. Dispositif selon la revendication 1, **caractérisé par** les caractéristiques suivantes :
a) une pluralité d'emballages (10) peut être transportée en vue du traitement, à savoir pour le scellement thermique et/ou le traitement de rétraction de l'enveloppe extérieure (11) le long de plusieurs bandes de transport, de préférence dressées, par des sangles verticales (19, 20),
b) plusieurs sangles verticales opposées les unes aux autres par paires (19, 20) sont disposées à distance les unes des autres, à savoir avec un espacement entre des paires adjacentes de sangles verticales (19, 20),
c) à chaque fois au moins une cassette (29) avec les organes de traitement nécessaires est disposée entre des sangles verticales adjacentes (19, 20) de telle sorte que les organes de traitement d'une cassette (29) se trouvent dans la région d'un emballage (10) ou d'une surface d'emballage, au moins pendant une phase d'immobilisation de l'emballage (10).

3. Dispositif selon la revendication 2, **caractérisé en ce que** les cassettes (29) disposées entre des paires adjacentes de sangles verticales (19, 20) présentent des organes de traitement (22, 23, 24 ; 26, 27, 28) au niveau de deux côtés opposés l'un à l'autre et à chaque fois associés à des rangées adjacentes d'emballages (10), et ce dans des parois dressées de la cassette (29), de préférence de telle sorte que d'un côté de la cassette (29) soit disposé un organe de transfert de chaleur et/ou de pression et du côté opposé un organe de pression commandable (26, 27, 28), de telle sorte que les organes de pression (26, 27, 28) pressent à chaque fois un emballage (10) contre un organe de traitement (22, 23, 24 ; 26, 27, 28) d'une cassette adjacente (29).

4. Dispositif selon la revendication 1 ou selon l'une quelconque des autres revendications précédentes, **caractérisé en ce que** la cassette (29) réalisée sous forme approximativement parallélépipédique présente, dans la région d'une paroi latérale dressée, dans un premier poste, d'un côté un organe chauffant, par exemple un organe de rétraction (22), et du côté opposé un organe de pression (26), ainsi qu'au-dessus de celui-ci, de l'autre côté de la cassette (29), un organe de pression (27), et du côté opposé à celui-ci, un organe chauffant, par exemple une mâchoire de scellement (23) et finalement dans un troisième poste supérieur, sur le même côté de la cassette (29), un organe chauffant supplémentaire, par exemple une mâchoire de scellement (24), et du côté opposé un organe de pression supplémentaire (28) .

5. Dispositif selon la revendication 1 ou selon l'une quelconque des autres revendications précédentes, **caractérisé en ce que** la cassette (29) est réalisée au moins en partie sous forme de corps creux, en particulier avec des chambres formées de manière correspondant au nombre des organes de traitement disposés les uns au-dessus des autres par paires, qui présentent des évidements sous forme de fenêtres (31) ou de renfoncements pour recevoir les organes, des canaux (39, 40, 41) pour l'alimentation et l'évacuation de fluides sous pression ou pour recevoir des lignes électriques (42) s'étendant dans des parois de la cassette (29) .

6. Dispositif selon la revendication 1 ou selon l'une quelconque des autres revendications précédentes, **caractérisé en ce que** des organes de pression (26, 27, 28) prévus pour solliciter les emballages traités (10) présentent une membrane de préférence circulaire (38) qui peut être sollicitée au moyen d'air comprimé jusqu'à venir en appui contre une surface d'emballage, la membrane (38) étant de préférence ancrée dans un renfoncement de forme circulaire de la cassette (29).

7. Dispositif selon la revendication 1 ou selon l'une quelconque des autres revendications précédentes, **caractérisé en ce que** des organes de chauffage allongés, à savoir des organes de rétraction (22) et/ou des mâchoires de scellement (23, 24), sont protégés contre le rayonnement thermique par rapport à l'intérieur de la cassette (29), en particulier par des tôles résistant à la chaleur (34) .

8. Dispositif selon la revendication 1 ou selon l'une quelconque des autres revendications précédentes, **caractérisé en ce que** les organes de chauffage, à savoir des organes de rétraction (22), des mâchoires de scellement (23, 24), peuvent être chauffés électriquement, en particulier par des cartouches de chauffage (36), des lignes électriques (42) conduisant à un connecteur enfichable (43) de préférence commun, monté ou façonné sur le boîtier de la cassette (29), qui, dans la position de travail de la cassette (29), établit la connexion électrique avec l'alimentation en énergie centrale, de préférence par le biais de connecteurs enfichables conjugués montés sur un bâti porteur du dispositif, avec un boîtier de connecteur enfichable (44).

9. Dispositif selon la revendication 1 ou selon l'une quelconque des autres revendications précédentes, **caractérisé en ce que** la cassette (29) présente un système de conduites d'air comprimé (39, 40, 41), par lesquelles les organes de pression (26, 27, 28) peuvent être sollicités de préférence simultanément avec de l'air comprimé, une conduite de collecte (41) débouchant dans la région d'un accouplement pneumatique (54) qui établit une liaison de la conduite de collecte (41) de la cassette (29) avec une alimentation en air comprimé de préférence centrale et commune.

10. Dispositif selon la revendication 1 ou selon l'une quelconque des autres revendications précédentes, **caractérisé en ce que** les cassettes (29), dans la position de travail, sont fixées de manière amovible, de préférence par des vis de fixation allongées (48), qui peuvent être actionnées au niveau d'un côté d'enlèvement libre et qui sont connectées à une partie d'une plaque de support (50) et **en ce que** de préférence au moins les organes de chauffage, à savoir des organes de rétraction (22), des mâchoires de scellement (23, 24), sont fixés de manière amovible à la cassette (29), de préférence par des vis de connexion (33).

11. Dispositif selon la revendication 2 ou selon l'une quelconque des autres revendications précédentes, **caractérisé en ce qu'**au moins des sangles verticales individuelles (19) ou un groupe de sangles verticales (19) peuvent être déplacés de la position de travail ou de transport (dressée) dans une position d'entretien ou de réparation, en particulier dans une position orientée horizontalement, de préférence au moins les sangles verticales déplaçables ou pivotantes (19) étant guidées ou passant sur des rouleaux de déflection qui sont de préférence supportés sur un arbre d'entraînement et qui peuvent être déplacés autour de l'arbre ou avec celui-ci par un déplacement de pivotement, dans la position de réparation ou d'entretien.

12. Dispositif selon la revendication 11, **caractérisé en ce que** plusieurs, de préférence la totalité, des sangles verticales du côté avant (19), peuvent être déplacées dans la position de réparation ou d'entretien, les sangles verticales déplaçables (19) étant connectées les unes aux autres par un bâti d'actionnement, en particulier par une tige de liaison orientée transversalement (64).

13. Dispositif selon la revendication 11 ou selon l'une quelconque des autres revendications précédentes, **caractérisé en ce que** de préférence des organes de support sont associés à chaque sangle verticale (19, 20), toutefois au moins aux sangles verticales pivotantes (19), en particulier des bras de sangles (55, 56) qui sont supportés de manière pivotante ou rotative sur l'arbre d'entraînement (59, 60) par une extrémité supérieure et servent à recevoir avec l'autre extrémité inférieure des rouleaux déflecteurs inférieurs des sangles verticales (19, 20) par le biais d'un axe (continu) (61, 62).

14. Dispositif selon la revendication 11 ou selon l'une quelconque des autres revendications précédentes, **caractérisé en ce que** des sangles verticales individuelles (19) sont déplaçables, à savoir dans une position de réparation ou d'entretien horizontale, de préférence des bras de sangles (55) ou des bras auxiliaires (68) sont associés à chaque sangle verticale pivotante (19) des deux côtés, et des extrémités libres inférieures déplaçables des sangles verticales (19) étant supportées avec des poulies de renvoi sur un tronçon d'axe qui relie des extrémités, à savoir des pièces de palier (58) des bras de sangles (55, 68), les unes aux autres.

15. Dispositif selon la revendication 2 ou selon l'une quelconque des autres revendications précédentes, **caractérisé par** un châssis porteur avec une plaque de support du côté arrière (50) et des pièces de support orientées transversalement, à savoir : des plaques de retenue (73, 74), notamment les arbres supérieurs (59, 60) pour l'entraînement des sangles verticales (19, 20) étant supportés à rotation dans les plaques de retenue (73, 74).

16. Dispositif selon la revendication 1 ou selon l'une quelconque des autres revendications précédentes, **caractérisé en ce que** des surfaces de travail ou des surfaces d'action d'organes de traitement des cassettes (29), en particulier des surfaces de pression ou de chauffage des organes de rétraction (22) et/ou des mâchoires de scellement (23, 24), sont en retrait par rapport à un contour extérieur ou une surface extérieure de la cassette (29), des moyens de guidage, en particulier des surfaces de guidage orientées obliquement (78) dans la région d'une fenêtre (31) pour l'agencement de l'organe, provoquant un coulissement transversal des emballages (10) après la réalisation d'un traitement sur la base du déplacement de transport.
